# EUROPEAN PATENT SPECIFICATION

(11) **EP 0 409 336 B1**
(45) Date of publication and mention of the grant of the patent: **13.04.1994**
(21) Application number: 90201920.7
(22) Date of filing: 16.07.1990
(51) Int. Cl.: A47J 43/046

(54) **Axial bearing for the drive shaft of a food processor**
Axiale Lagerung einer Antriebswelle bei einer Küchenmaschine
Dispositif d'appui axial de l'arbre d'entraînement d'un robot ménager

(30) Priority: 21.07.1989 NL 8901889
(43) Date of publication of application: 23.01.1991
(73) Proprietor: Philips Electronics N.V., 5621 BA Eindhoven (NL)
(72) Inventor: Mugge, Jan, NL-5656 AA Eindhoven (NL); Groothuis, Gerrit Jan, NL-5656 AA Eindhoven (NL)
(74) Representative: Bos, Kornelis Sjoerd

(56) References cited:
- EP-A- 0 081 286
- EP-A- 0 158 032
- EP-A- 0 292 664
- EP-A- 0 293 580
- CH-A- 363 765
- FR-A- 2 486 385
- FR-A- 2 608 409

## Description

The invention relates to a food processor comprising a housing in which a motor is accommodated, a bowl which can be connected to the housing so as to be detachable, a cover having a feeding tube, a driving shaft which is driven by the motor via a transmission mechanism and which projects upwards both through an aperture in the housing and through an aperture in a bottom of the bowl, the said driving shaft being formed by an upper shaft and a lower shaft which are connected together by means of a coupling, the upper shaft being journalled in the cover and being suitable for connecting a tool thereto, the lower shaft being journalled in a frame plate by means of a bearing, the said frame plate being suspended in the housing by means of resilient elements.

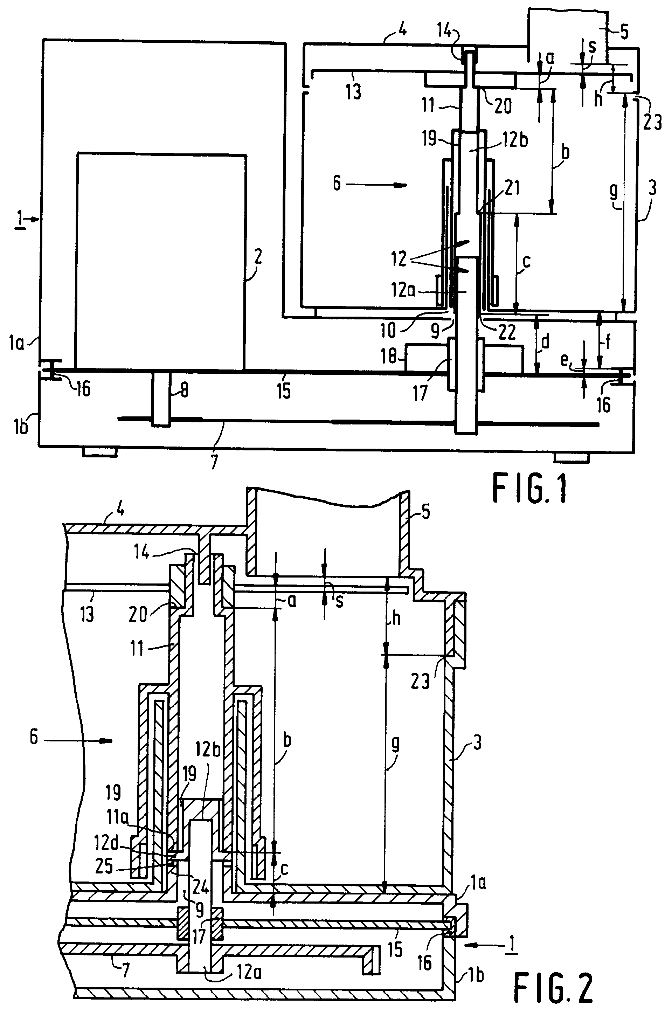

Such a food processor is known from EP-A-0 158 032. Said food processor is shown diagrammatically in Fig. 1. The food processor is constructed from a housing 1 consisting of two housing parts 1a and 1b, a motor 2, a bowl 3 which can be placed on the housing part 1a so as to be detachable and can be closed by means of a cover 4 which has a feeding tube 5. A driving shaft 6 is driven by the motor shaft 8 via a transmission mechanism, for example, a belt transmission 7. The driving shaft projects upwards both through an aperture 9 in the housing part 1a and through an aperture 10 in the bottom of the bowl 3 and is formed by an upper shaft 11 and a lower shaft 12. The latter consists of a metal shaft 12a and an electrically insulated sleeve 12b which is rigidly connected to the metal shaft 12a. The upper shaft 11, also termed adapter, is suitable for connecting a tool thereto, for example, a cutter 13 (in the upper part in the bowl) or a sickle-shaped knife not shown (in the lower part in the bowl). The cover 4 comprises a bearing 14 for journalling the upper shaft 11. The housing comprises a frame plate 15 which is suspended between the housing parts 1a and 1b. The frame plate 15 comprises a bearing 17 for journalling the lower shaft 12. The frame plate further comprises a bridge-shaped reinforcing element 18 for extra support of the bearing 17. The motor 2 is further connected to the frame plate. In such a known food processor the upper shaft 11 is connected to the lower shaft 12 by means of a coupling 19.

In the prior-art construction the axial force which is exerted during cutting is compensated by the bearing 17. The size of the cutting gap is of importance in the cutting process, namely the distance or clearance between the lower side of the feeding tube 5 and the upper side of the cutter 13. The size of the said clearance S depends on a large number of dimensions with associated tolerances. Fig. 1 shows the prior-art food processor. In this Figure the dimensions of the components which are decisive of the clearance S are shown. Some of the indicated tolerance dimensions are built up from several tolerance-dependent dimensions. This clearance S depends on the tolerances of the following dimensions:
- upper side cutter 13 to cutter support 20 on the upper shaft 11 - (a)
- upper shaft 11: from cutter support 20 to support 21 of upper shaft 11 on insulated sleeve 12b - (b)
- insulated sleeve 12b: from support 21 to connection 22 of sleeve 12b on metal shaft 12a - (c)
- metal shaft 12a: from connection 22 of insulated sleeve 12b on metal shaft 12a to frame plate 15 - (d)
- resilient elements 16 - (e)
- housing part 1a: from resilient elements 16 to connection of bowl 3 on housing - (f)
- bowl 3: from connection bowl on housing to engaging edge 23 of cover 4 on bowl 3 - (g)
- cover 4: from engaging edge cover on bowl to lower edge of feeding tube 5 - (h).

As a result of this large number of tolerances, the value of the tolerance of the clearance S is also large.

It is the object of the invention to reduce the tolerance of said clearance S.

This can be achieved in that the frame plate is suspended between the housing parts by means of resilient elements and the driving shaft is journalled axially in the housing.

The axial bearing is preferably formed by a stationary ring which is provided on an edge of the housing aperture through which the driving shaft extends, and a flange of an insulated sleeve known per se which is rigidly connected to the lower driving shaft, said flange serving as a bearing surface for the metal ring.

Due to the axial bearing a number of inconsiderable tolerance dimensions are omitted, as will be explained hereinafter with reference to Fig. 2 in which like components are referred to by the same reference numerals. The upper driving shaft 11 is coupled in the direction of rotation to the insulated sleeve 12b of the lower driving shaft 12 and supports with its lower edge 11a in the axial direction on a flange of the insulated sleeve. The sleeve 12b is journalled axially in the housing part 1a. For this purpose an edge 24 of housing part 1a comprises a metal ring 25 near the aperture 9. The annular flange 12d of the insulated sleeve 12b serves as a bearing surface for the metal ring 25. The upper driving shaft 11 therefore is journalled axially in the housing via the insulated sleeve 12b. As a result of this the tolerance dimensions d, e and f have no influence any longer on the dimension of the clearance S. it has been found that the clearance of the cutting gap has reduced by approximately half.

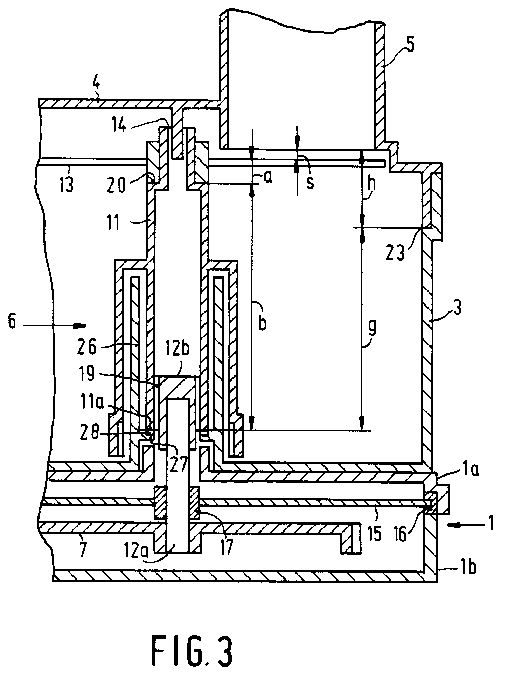

Fig. 3 shows an alternative construction for the axial bearing. The bowl 3 comprises an upright sleeve 26 which projects upwards from the bottom of the bowl. Said sleeve 26 comprises an inwardly directed annular flange 27 on which a metal ring 28 is connected. The annular lower edge 11a of the upper driving shaft 11 serves as a bearing surface for the metal ring 28. The upper driving shaft 11 is now journalled axially in the bowl 3. As a result of this the tolerance for the clearance S has become even smaller because the tolerance of dimension c in the tolerance path for the clearance slot S is omitted.

An extra advantage of such axial bearing constructions is that the bearing 17 for the lower driving shaft 12 is substantially not loaded any longer with axial forces as a result of the cutting process.

## Claims

1. A food processor comprising a housing (1) in which a motor (2) is accommodated, a bowl (3) which can be connected to the housing (1) so as to be detachable, a cover (4) having a feeding tube (5), a driving shaft (6) which is driven by the motor (2) via a transmission mechanism (7) and which projects upwards both through an aperture (9) in the housing (1) and through an aperture (10) in a bottom of the bowl (3), the said driving shaft (6) being formed by an upper shaft (11) and a lower shaft (12) which are connected together by means of a coupling (19), the upper shaft (11) being journalled in the cover (4) and being suitable for connecting a tool (13) thereto, the lower shaft (12) being journalled in a frame plate (15) by means of a bearing (17), characterized in that the said frame plate (15) being suspended in the housing (1) by means of resilient elements (16), and the driving shaft (6) is journalled axially in the housing (1).

2. A food processor as claimed in claim 1, characterized in that the driving shaft (6) is journalled axially by a metal ring (25) provided on an edge (24) of the aperture (9) in the housing (1), and by a flange (12d) of an insulated sleeve (12b) which is known per se and which is rigidly connected to the lower shaft (12), said flange (12d) serving as a bearing surface for the metal ring (25).

3. A food processor comprising a housing (1) in which a motor (2) is accommodated, a bowl (3) which can be connected to the housing (1) so as to be detachable, a cover (4) having a feeding tube (5), a driving shaft (6) which is driven by the motor (2) via a transmission mechanism (7) and which projects upwards both through an aperture (9) in the housing (1) and through an aperture (10) in a bottom of the bowl (3), the said driving shaft (6) being formed by an upper shaft (11) and a lower shaft (12) which are connected together by means of a coupling (19), the upper shaft (11) being journalled in the cover (4) and being suitable for connecting a tool (13) thereto, the lower shaft (12) being journalled in a frame plate (15) by means of a bearing (17), characterized in that the said frame plate (15) being suspended in the housing (1) by means of resilient elements (16), and the driving shaft (6) is journalled axially in the bowl (3).

4. A food processor as claimed in claim 3, characterized in that the bowl (3) comprises an insulated sleeve (26) which is known per se and which projects upwards from the bottom of the bowl (3) and through which the driving shaft (6) extends, the driving shaft (6) being journalled axially by a metal ring (28) provided on an inwardly directed annular flange (27) of the sleeve (26), an annular lower edge (11a) of the upper shaft (11) serving as a bearing surface for the metal ring (28).

## Patentansprüche

1. Küchenmaschine mit einem Gehäuse (1) mit darin untergebrachtem Motor (2), einer Schüssel (3), die mit dem Gehäuse (1) abnehmbar verbunden werden kann, einem Deckel (4) mit einem Einfüllstutzen (5), einer vom Motor (2) über einen Übertragungsmechanismus (7) angetriebenen und durch eine Öffnung (9) im Gehäuse (1) und eine Öffnung (10) im Boden der Schüssel (3) nach oben herausragenden Antriebswelle (6), wobei diese Antriebswelle (6) von einer oberen Welle (11) und einer unteren Welle (12) gebildet wird, die mittels einer Kupplung (19) miteinander verbunden sind, wobei die obere Welle (11) im Deckel (4) gelagert und für den Anschluß eines Werkzeugs (13) geeignet ist, während die untere Welle (12) mittels eines Lagers (17) in einer Rahmenplatte (15) gelagert ist, dadurch gekennzeichnet, daß diese Rahmenplatte (15) mit Hilfe von elastischen Elementen (16) im Gehäuse (1) aufgehängt und die Antriebswelle (6) axial im Gehäuse (1) gelagert ist.

2. Küchenmaschine nach Anspruch 1, dadurch gekennzeichnet, daß die Antriebswelle (6) mittels eines an einem Rand (24) der Öffnung (9) im Gehäuse (1) angebrachten Metallrings (25) und eines Flansches (12d) an einer an sich bekannten, mit der unteren Antriebswelle (12) fest verbundenen Isolierhülse (12b) axial gelagert ist, wobei dieser Flansch (12d) als Lagerfläche für den Metallring (25) dient.

3. Küchenmaschine mit einem Gehäuse (1) mit darin untergebrachtem Motor (2), einer mit dem Gehäuse (1) abnehmbar verbindbaren Schüssel (3), einem Deckel (4) mit einem Einfüllstutzen (5), einer vom Motor (2) über einen Übertra- gungsmechanismus (7) angetriebenen und durch eine Öffnung (9) im Gehäuse (1) und eine Öffnung (10) im Boden der Schüssel (3) nach oben herausragenden Antriebswelle (6), wobei diese Antriebswelle (6) von einer oberen Welle (11) und einer unteren Welle (12) gebildet wird, die mittels einer Kupplung (19) miteinander verbunden sind, wobei die obere Welle (11) im Deckel (4) gelagert und für den Anschluß eines Werkzeugs (13) geeignet ist, während die untere Welle (12) mittels eines Lagers (17) in einer Rahmenplatte (15) gelagert ist, dadurch gekennzeichnet, daß diese Rahmenplatte (15) mit Hilfe von elastischen Elementen (16) im Gehäuse (1) aufgehängt und die Antriebswelle (6) in der Schüssel (3) axial gelagert ist.

4. Küchenmaschine nach Anspruch 3, dadurch gekennzeichnet, daß die Schüssel (3) eine an sich bekannte, aus dem Boden der Schüssel (3) nach oben ragende Isolierhülse (26) umfaßt, durch die die Antriebswelle (6) läuft, wobei die Antriebswelle (6) mittels eines auf einem nach innen gerichteten Rundflansch (27) der Hülse (26) angebrachten Metallrings (28) axial gelagert ist, während ein ringförmiger unterer Rand (11a) der oberen Welle (11) als Lagerfläche für den Metallring (28) dient.

## Revendications

1. Robot ménager comprenant un boîtier (1) dans lequel est logé un moteur (2), un bol (3) qui peut être relié au boîtier (1) de manière à être détachable, un couvercle (4) comportant un tube d'alimentation (5), un arbre d'entraînement (6) qui est entraîné par le moteur (2) via un mécanisme de transmission (7) et qui fait saillie vers le haut à la fois à travers une ouverture (9) ménagée dans le boîtier (1) et à travers une ouverture (10) ménagée dans un fond du bol (3), ledit arbre d'entraînement (6) étant formé par un arbre supérieur (11) et par un arbre inférieur (12) qui sont reliés l'un à l'autre au moyen d'un accouplement (19), l'arbre supérieur (11) tourillonnant dans le couvercle (4) et étant conçu pour qu'un outil (13) puisse y être relié, l'arbre inférieur (12) tourillonnant dans une plaque de support (15) par l'intermédiaire d'un palier (17), caractérisé en ce que ladite plaque de support (15) est suspendue dans le boîtier (1) à l'aide d'éléments élastiques (16) et que l'arbre d'entraînement (6) tourillonne axialement dans le boîtier (1).

2. Robot ménager selon la revendication 1, caractérisé en ce que le tourillonnement axial de l'arbre d'entraînement (6) est assuré par un anneau métallique (25) prévu sur un bord (24) de l'ouverture (9) du boîtier (1), et par une bride (12d) d'un manchon isolé (12b) qui est connu en soi et qui est relié de manière rigide à l'arbre inférieur (12), ladite bride (12d) servant de surface de palier pour l'anneau métallique (25).

3. Robot ménager comprenant un boîtier (1) dans lequel un moteur (2) est logé, un bol (3) qui peut être connecté au boîtier (1) de manière à être détachable, un couvercle (4) comportant un tube d'alimentation (5), un arbre d'entraînement (6) qui est entraîné par le moteur (2) via un mécanisme de transmission (7) et qui fait saillie vers le haut à la fois à travers une ouverture (9) ménagée dans le boîtier (1) et à travers une ouverture (10) ménagée dans un fond du bol (3), ledit arbre d'entraînement (6) étant formé par un arbre supérieur (11) et par un arbre inférieur (12) qui sont reliés l'un à l'autre au moyen d'un accouplement (19), l'arbre supérieur (11) tourillonnant dans le couvercle (4) et étant conçu pour qu'un outil (13) puisse y être relié, l'arbre inférieur (12) tourillonnant dans une plaque de support (15) par l'intermédiaire d'un palier (17), caractérisé en ce que ladite plaque de support (15) est suspendue dans le boîtier (1) à l'aide d'éléments élastiques (16) et que l'arbre d'entraînement (6) tourillonne axialement dans le bol (3).

4. Robot ménager selon la revendication 3, caractérisé en ce que le bol (3) comprend un manchon isolé (26) qui est connu en soi, qui fait saillie vers le haut depuis le fond du bol (3) et à travers lequel l'arbre d'entraînement (6) s'étend, le tourillonnement axial de l'arbre d'entraînement (6) étant assuré par un anneau métallique (28) prévu sur une bride annulaire (27) du manchon (26) dirigée vers l'intérieur, un bord inférieur annulaire (11a) de l'arbre supérieur (11) jouant le rôle de surface de palier pour l'anneau métallique (28).
